# EUROPÄISCHE PATENTSCHRIFT

(11) **EP 1 125 174 B1**
(45) Veröffentlichungstag und Bekanntmachung des Hinweises auf die Patenterteilung: **06.08.2003**
(21) Anmeldenummer: 99969506.7
(22) Anmeldetag: 21.09.1999
(51) Int. Cl.: G05B 19/418

(54) **BEARBEITUNGSWERKZEUG UND BEARBEITUNGSVORRICHTUNG ZUR BEARBEITUNG EINES WERKSTÜCKS**
PROCESSING TOOL AND PROCESSING DEVICE FOR PROCESSING A WORKPIECE
OUTIL DE TRAITEMENT ET DISPOSITIF DE TRAITEMENT POUR FA ONNER UNE PIECE A TRAVAILLER

(30) Priorität: 21.09.1998 DE 19843151
(43) Veröffentlichungstag der Anmeldung: 22.08.2001
(73) Patentinhaber: Alfing Montagetechnik GmbH, 73433 Aalen (DE)
(72) Erfinder: GASS, Baltes, Auguste-Kessler-Strasse 20, 73433 Aalen (DE)
(74) Vertreter: HOFFMANN - EITLE
(86) Internationale Anmeldenummer: EP9906961
(87) Internationale Veröffentlichungsnummer: WO00017720

(56) Entgegenhaltungen:
- EP-B- 0 335 010
- DE-A- 3 637 236
- GB-A- 2 279 775
- US-A- 5 408 076
- US-A- 5 432 702
- TOLLNER K: "WERKZEUGE MIT KOPFCHEN: INTELLIGENZ DURCH SPEICHERCHIPS" VDI Z,DE,VDI VERLAG GMBH. DUSSELDORF, Bd. 130, Nr. 6, 1. Juni 1988 (1988-06-01), Seiten 70-73, XP000026947 ISSN: 0042-1766

## Beschreibung

### Gebiete der Erfindung

Die vorliegende Erfindung betrifft ein handgeführtes Bearbeitungswerkzeug zur Bearbeitung eines Werkstücks und eine Bearbeitungsvorrichtung zur Bearbeitung eines Werkstücks mit vorgegebenen Bearbeitungsparametern nach dem Oberbegriff der Ansprüche 1,2. Das Bearbeitungswerkzeug und die Bearbeitungsvorrichtung sind insbesondere für die Bearbeitung von Werkstücken in der industriellen Serienfertigung vorgesehen, bei der eine Vielzahl von sich ständig wiederholenden Montagevorgängen, z.B. das Festdrehen von Schrauben oder Muttern, mit Hilfe von hand- oder motorgetriebenen Montagewerkzeugen durchgeführt wird, wobei es darauf ankommt, daß bestimmte Montageparameter, z.B. das Drehmoment und/oder der Drehwinkel, mit dem eine Schraube oder Mutter festgezogen wird, eingehalten werden.

### Hintergrund der Erfindung

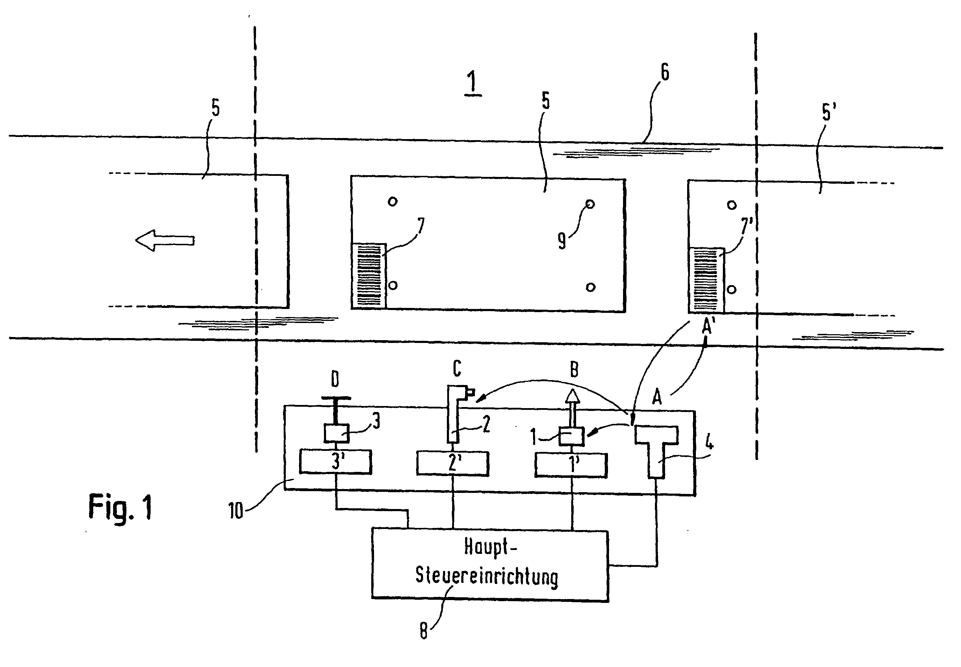

Fig. 1 zeigt einen Überblick über eine Fertigungsstraße 6, beispielsweise in der Automobilfertigung, bei der eine Vielzahl von Werkstücken 5, beispielsweise Fahrzeugkarosserien, sukzessive auf einem Förderband 6 laufen. Bearbeitungsvorgänge an einzelnen Bearbeitungsstellen 9 werden in einem jeweiligen Bearbeitungsbereich 1 mit einer Vielzahl von Bearbeitungswerkzeugen 1, 2, 3 vorgenommen. Das Bearbeitunswerkzeug 1 ist beispielsweise ein Stabschrauber, das Bearbeitungswerkzeug 2 ist beispielsweise ein Winkelschrauber und das Bearbeitungswerkzeug 3 ist beispielsweise eine Schleifvorrichtung. Jedes Bearbeitungswerkzeug 1, 2, 3 weist eine zugehörige Steuereinheit 1', 2', 3' auf, die von einer Haupt-Steuereinrichtung 8 gesteuert wird. Die Haupt-Steuereinrichtung 8 gibt den Arbeitsplan vor, wobei den einzelnen Steuereinheiten 1', 2', 3' die jeweiligen Bearbeitungsparameter, die Anzahl von Bearbeitungsvorgängen etc., die von jedem Bearbeitungswerkzeug ausgeführt werden sollen, mitgeteilt wird. Beispielsweise können die Steuereinheiten 1', 2' einen Stecknußkasten für den Stab- bzw. Winkelschrauber aufweisen und für jeden Arbeitsvorgang das Drehmoment und/den Drehwinkel bei jedem Schraubvorgang vorgeben, wobei während des Bearbeitungsschrittes die IstWerte von dem jeweiligen Bearbeitungswerkzeug 1, 2 gemessen werden. Eine Bearbeitungsparameter-Vorgabeeinrichtung gibt somit für bestimmte Bearbeitungsstellen 9 Bearbeitungsparameter vor und eine Bedienungsperson führt die Bearbeitungswerkzeuge 1, 2, 3 an die jeweiligen Bearbeitungsstellen 9 und führt eine Bearbeitung aus.

Die Bearbeitungswerkzeuge können auf dem Werkzeugtisch 10 in vorgegebener Reihenfolge oder wahllos angeordnet sein, wobei Fig. 1 lediglich den Ursprungszustand beispielsweise zu Beginn eines Tages zeigt. In der Automobilfertigung, bei der beispielsweise an einer Fahrzeugkarrosserie 5 Motorblöcke, Türen, Räder etc. montiert werden müssen, beträgt die Länge des jeweiligen Bearbeitungsbereichs (Montagebereichs) 1 mehrere Meter und auch der Abstand zwischen dem jeweiligen Werkstück 5 und der Stelle, an der der Werkzeugtisch 10 (oder irgendeine andere Bearbeitungswerkzeug-Aufnahmeeinrichtung) angeordnet ist, beträgt einige Meter.

### Stand der Technik

Obwohl Arbeitsvorgänge bei den in Fig. 1 gezeigten Werkstücken 5, z.B. Montagevorgänge, prinzipiell bei jedem Werkstück in der gleichen Reihenfolge ausgeführt werden müssen, so können sich doch einzelne Bearbeitungsparameter und/oder der Ablauf von bestimmten Bearbeitungsvorgängen von Werkstück zu Werkstück unterscheiden. Beispielsweise kann ein erstes Werkstück 5 eine US-Ausführung eines Automobils und das Werkstück 5' eine Europa-Ausführung des Automobils sein. Die US-Ausführung erfordert beispielsweise andere Drehmomente für die Schraubvorgänge als die Europa-Ausführung. Deshalb muß die Haupt-Steuereinrichtung 8 für jedes in den Bearbeitungsbereich 1 eintretende Werkstück 5' die in den Steuereinheiten 1', 2', 3' vorgesehenen Einstelleinrichtungen zum Einstellen der einen oder mehreren Bearbeitungswerkzeuge auf bestimmte Bearbeitungsparameter 14 steuern. Dazu ist an jedem Werkstück 5' typischerweise Werkstück-spezifische Information und/oder Bearbeitungs-spezifische Information in Form einer Werkstückkarte 7' vorgesehen, die dann in den Steuereinheiten zur Steuerung der Werkzeuge verfügbar sein muß.

Eine getrennt vorgesehene Leseeinrichtung 4, die direkt mit der Haupt-Steuereinrichtung 8 gekoppelt ist, wird von der Bedienungsperson am Punkt A aufgenommen und zu dem Werkstück 5' bewegt, um die auf der Karte 7' gespeicherte Information irgendwie zu lesen. Normalerweise wird dafür eine optische Scaneinrichtung zum Lesen eines Strichcodes auf der Bearbeitungskarte 7' verwendet.

Zu Beginn wird durch das Lesen der Information 7' eine Voreinstellung der Haupt-Steuereinrichtung und damit der Steuereinheiten 1', 2', 3' vorgenommen, wobei die Bedienungsperson zum Punkt A gehen muß, dann zum Punkt A', wonach die Leseeinrichtung 4 wieder auf der Aufnahmeeinrichtung 10 plaziert wird. Danach geht die Bedienungsperson an den Punkt B oder an den Punkt C, um das erste Bearbeitungswerkzeug 1 oder 2 aufzunehmen (wie mit den Pfeilen in Fig. 1 dargestellt).

Bei der Serienfertigung, bei der sich die Werkstücke 5, 5' mit einer vorgegebenen Geschwindigkeit durch den Bearbeitungsbereich 1 bewegen, sind vorgegebene Zeiten einzuhalten, um eine rentable Fertigung zu ermöglichen. Im Stand der Technik sind deshalb bereits automatische Bearbeitungswerkzeuge, die aufgrund von vorgegebenen Sollwerten automatisch einen Bearbeitungsvorgang ausführen können, verfügbar (beispielsweise automatische Drehschrauber etc.).

In Anbetracht der gewünschten Zeitminimierung zur Optimierung des Fertigungsprozesses hat der Erfinder der vorliegenden Anmeldung jedoch ein weiteres unbekanntes Problem entdeckt. Unweigerlich muß die Haupt-Steuereinrichtung 8 bzw. die einzelnen Steuereinheiten 1', 2', 3' jeweils mit der relevanten Information auf der Bearbeitungskarte 7' mit einem getrennten Lesevorgang mit Hilfe der getrennten Leseeinrichtung 4 voreingestellt werden. Das heißt, es ist ein zusätzlicher Arbeitsvorgang vom Punkt A zum Punkt A' und zurück zur Aufnahmeeinrichtung 10 erforderlich. Zusätzlich ist dieser Vorgang für jedes Werkstück getrennt erforderlich. Dieser zusätzliche Arbeitsvorgang erhöht die Fertigungszeit beträchtlich.

Die DE 36 37 236 A1 beschreibt eine Steuerungs- und Überwachungsanordnung für ein Werkzeug, wobei in einem Raumbereich, in dem sich das Werkzeug befindet, ein Sender eine Informationsdusche in den Raumbereich hineinsendet, in dem sich das Werkstück befindet. Ein handgeführtes Bearbeitungswerkzeug enthält einen Empfänger. Das von Empfänger bei Annäherung des Werkzeugs beim Eintauchen in den Raumbereich empfangene Signal wird als Erkennungssignal für die Anwesenheit des Werkzeugs in dem Raumbereich an eine Einstelleinheit weitergeleitet. Wenn die Einstelleinheit das Erkennungssignal empfängt, so stellt diese das Bearbeitungswerkzeug auf bestimmte bearbeitungsspezifische Parameter ein, nämlich auf diejenigen, die für die Bearbeitung des Werkzeugs in dem erkannten Raumbereich erforderlich sind. Hier wird also im Ansprechen auf das Erkennungssignal eine Auswahl von Sollwerten in der Kontrolleinheit vorgenommen. Die Empfängereinheit selbst ist jedoch lediglich dafür ausgelegt, um eine Aussendung des vom Sender ausgesendeten Signals zu erfassen und damit eine Erkennung über die Anwesenheit des Werkzeugs im Raumbereich bereitzustellen.

Die US 5,432,702 beschreibt für einen Wafer-Prozess die Verwendung eines getrennten Barcodelesers und eines Werkzeugs. Der Barcodeleser liest eine Laufkarte und sendet Information darüber an einen Host Computer, der die Barcodeinformation interpretiert und den geeigneten Prozessschritt bestimmt, der als nächstes ausgeführt werden soll. Bei dem Bearbeitungswerkzeug handelt es sich um ein Bearbeitungswerkzeug zur Bearbeitung eines Wafers.

In Tollner, K.: "Werkzeuge mit Köpfchen: Intelligenz durch Speicherchips", VDI Z, DE, VDI Verlag GmbH, Düsseldorf, Band 130, Nr. 6, 1. Juni 1988, S. 70-73, XP000026947 ISSN: 0042-1766 ist beschrieben, dass zur Werkzeugidentifizierung ein Datenträger in das eigentliche Werkzeug eingebaut wird. Dafür können geklebte Strichcode-Etiketten oder elektronische Datenspeicher verwendet werden. Der Datenträger kann über einen Schreib-/Lesekopf beschrieben oder gelesen werden. Mit einer derartigen Werkzeugidentifizierung lässt sich beispielsweise feststellen, ob ein bestimmtes Bearbeitungswerkzeug in einem Bearbeitungskopf der Bearbeitungsvorrichtung vorhanden ist oder nicht.

### Aufgabe der Erfindung

Wie voranstehend erläutert, ist die zeitliche Optimierung des Fertigungsprozesses ein wichtiges Augenmerk bei der Kostenreduzierung in der Serienfertigung. Das von dem Erfinder erkannte und der Erfindung zugrundeliegende Problem besteht somit darin, **ein handgeführtes Bearbeitungswerkzeug und** eine Bearbeitungsvorrichtung anzugeben, die einen zeitoptimierten Fertigungsprozeß, insbesondere eine Verringerung der Zeit zur Voreinstellung der Steuereinheiten von Bearbeitungswerkzeugen, ermöglicht.

### Lösung der Aufgabe

Diese Aufgabe wird durch ein Werkzeug nach Anspruch 1 und eine Vorrichtung nach Anspruch 2 gelöst.

Gemäß einem Aspekt der Erfindung ist eine Bearbeitungsvorrichtung zur Bearbeitung eines Werkstücks mit vorgegebenen Bearbeitungsparametern vorgesehen, wobei ein oder mehrere Bearbeitungswerkzeuge eine Erfassungseinrichtung zum Erfassen von werkstückspezifischen Parametern und/oder bearbeitungsspezifischen Parametern umfaßt/umfassen. Die Erfassungseinrichtung kann Information lesen, beispielsweise die an einem Werkstück angebrachte Information bezüglich der Bearbeitungsparamter und der werkstückspezifischen Parameter. Da die Erfassungseinrichtung Teil des Bearbeitungswerkzeugs ist, kann sofort nach Erfassen der spezifischen Parameter der Bearbeitungsvorgang begonnen werden, ohne daß eine Bedienungsperson eine getrennt vorgesehene Leseeinrichtung in die Werkzeugaufnahmeeinrichtung zurückplatzieren muß. Somit kann die Zeit zum Beginn des Arbeitsvorgangs beträchtlich verringert werden.

### Bevorzugte Ausführungsformen der Erfindung

Die Erfassungseinrichtung umfaßt gemäß einem anderen Aspekt eine optische Scaneinrichtung, wobei die spezifischen Parameter als ein Strichcode ausgeführt sein können. Die Bedienungsperson muß somit mit dem Bearbeitungswerkzeug lediglich den Strichcode anpeilen.

Gemäß einem weiteren Aspekt der Erfindung ist die Erfassungseinrichtung auf das Bearbeitungswerkzeug aufgesetzt oder in ein Gehäuse des Bearbeitungswerkzeugs integriert.

Die bearbeitungsspezifischen Parameter umfassen vorzugsweise eine Anzahl von vorgegebenen Arbeitsvorgängen für jedes Bearbeitungswerkzeug in jedem Bearbeitungsschritt, und eine Freigabevorrichtung ist vorgesehen, die ein oder mehrere Bearbeitungswerkzeuge für einen nachfolgenden Arbeitsschritt nur dann freigibt, wenn eine Arbeitsvorgangs-Erfassungseinrichtung feststellt, daß die vorgegebenen Arbeitsvorgänge in einem vorangehenden Arbeitsschritt ausgeführt wurden.

Wenn die Bearbeitungswerkzeuge Drehschrauber sind, geben die werkstückspezifischen Parameter den Werkstücktyp an, und die bearbeitungsspezifischen Parameter sind Schraubparametersätze für den einen oder die mehreren Drehschrauber pro Arbeitsschritt.

Weitere vorteilhafte Ausführungsformen und Verbesserungen der Erfindung sind in den Unteransprüchen angegeben. Nachstehend wird die Erfindung anhand ihrer Ausführungsformen unter Bezugnahme auf die Zeichnungen näher erläutert.

### Kurzbeschreibung der Zeichnungen

In den Zeichnungen zeigen:
- Fig. 1: einen Überblick über einen Bearbeitungsbereich 1 in der industriellen Serienfertigung von Werkstücken 5, 5';
- Fig. 2: einen Überblick über einen Bearbeitungsbereich 1 mit einer Bearbeitungsvorrichtung, die Bearbeitungswerkzeuge gemäß der Erfindung umfaßt; und
- Fig. 3: eine Ausführungsform eines Bearbeitungswerkzeugs mit einer aufgesetzten Scaneinrichtung.

### Beschreibung der bevorzugten Ausführungsformen

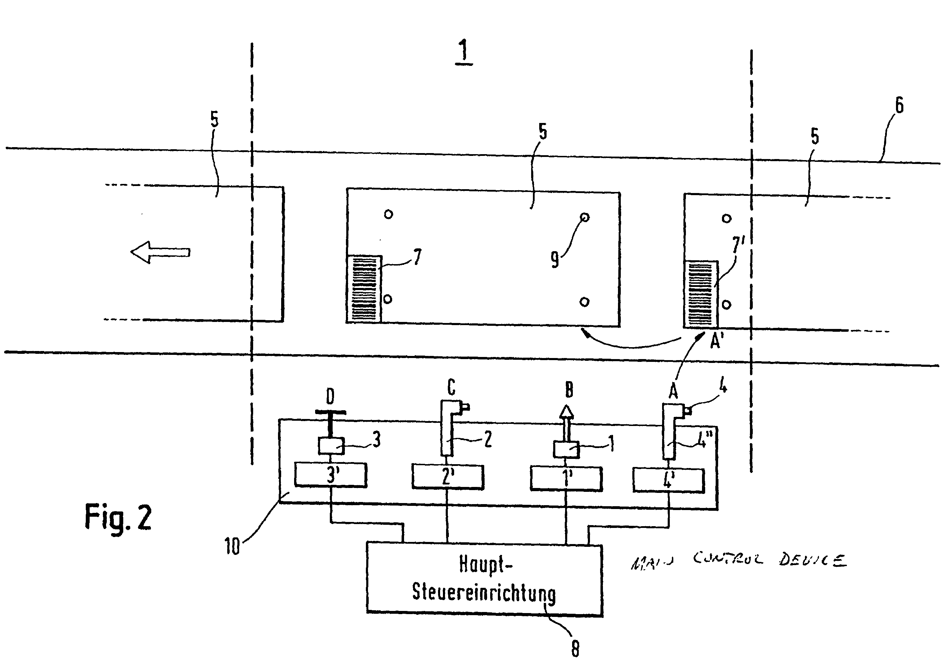

Figur 2 zeigt einen Überblick über den Bearbeitungsbereich 1 ähnlich wie in Figur 1, wobei eine Vielzahl von Bearbeitungswerkzeugen 1-3, 4'' mit jeweils zugeordneten Steuereinheiten 1-4' gezeigt sind. Diese befinden sich, wie in Figur 1 auf einem Bearbeitungswerkzeugtisch (oder einer Bearbeitungswerkzeug-Aufnahmeeinrichtung) 10. Die einzelnen Steuereinheiten 1'-4' sind mit der Haupt-Steuereinrichtung 8 verbunden. Die Bearbeitungsvorrichtung zur Bearbeitung eines Werkstücks 5, 5' mit vorgegebenem Bearbeitungsparametern umfaßt ein oder mehrere Bearbeitungswerkzeuge 1-3, 4'', sowie die einzelnen Steuereinheiten 1'-4'. Es sei darauf hingewiesen, daß die Bearbeitungswerkzeuge 1-3, 4'' natürlich auch direkt mit einer Haupt-Steuereinrichtung 8 verbunden sein können.

Wie in Figur 2 gezeigt, umfaßt auch das Bearbeitungswerkzeug 4'', das sich hier an dem Ort A befindet, eine zugeordnete Steuereinheit 4', so daß auch dieses Bearbeitungswerkzeug 4'' voll funktionsfähig wie die anderen Bearbeitungswerkzeuge 1-3 ist. Erfindungsgemäß umfaßt das Bearbeitungswerkzeug 4'' eine Erfassungseinrichtung 4 zum Erfassen von werkstückspezifischen Parametern 7 und/oder bearbeitungs-spezifischen Parametern 7, die beispielsweise an dem Werkstück 5' in Form einer Bearbeitungskarte 7 angebracht sind.

Wenn eine Bedienungsperson das Bearbeitungswerkzeug 4'' mit der dort vorgesehenen Erfassungseinrichtung 4 vom Punkt A zum Punkt A' bewegt, so können mittels der Erfassungseinrichtung 4 die jeweiligen Parameter 7' gelesen werden, wobei das Bearbeitungswerkzeug 4'' die erfaßten Parameter über die Steuereinheit 4' an die Haupt-Steuereinrichtung 8 überträgt, die auf Grundlage der erfaßten Parameter dann eine Steuerung der einzelnen Steuereinheiten 1'-4' und somit der einzelnen Bearbeitungswerkzeuge 1-3, 4'' vornimmt.

Wie in Figur 2 mit den Pfeilen dargestellt, kann eine Bedienungsperson einen Bearbeitungsvorgang mit dem Bearbeitungswerkzeug 4'' sofort beginnen, nachdem am Punkt A' die Information gelesen worden ist (das Werkstück 5 sei dabei so betrachtet, daß es sich um das Werkstück 5' nach einer vorgegebenen Zeit handelt, da sich die Werkstücke mit einer vorgegebenen Geschwindigkeit durch den Bearbeitungsbereich 1 bewegen).

Obwohl in Figur 2 nur ein Bearbeitungswerkzeug 4'' mit der Erfassungseinrichtung 4 versehen ist, kann die Bearbeitungsvorrichtung so ausgeführt sein, daß sämtliche Bearbeitungswerkzeuge 1-3 auch eine Erfassungseinrichtung 4 aufweisen, so daß garantiert werden kann, daß ein kontinuierlicher Bearbeitungsvorgang unmittelbar nach Lesen der Parameter mit jedem Werkzeug begonnen werden kann. Somit wird sichergestellt, daß für beliebige Arbeitspläne, die mit den werkstück-spezifischen Parametern und/oder den bearbeitungs-spezifischen Parametern definiert werden, ausgeführt werden können. Da der Benutzer das Bearbeitungswerkzeug nicht mehr in die Aufnahmeeinrichtung zurückplazieren muß, nachdem die Parameter gelesen wurden, wird ein kontinuierlicher Arbeitsvorgang ermöglicht und die Zeit für die Fertigung wird verkürzt.

Die bearbeitungs-spezifischen Parameter 7, die von der Erfassungseinrichtung 4 erfaßt werden, umfassen für jedes Bearbeitungswerkzeug eine Anzahl von vorgegebenen Arbeitsvorgängen, beispielsweise Schraubvorgängen (Anzahl von Schraubverbindungen) und eine Freigabeeinrichtung, die entweder in der Haupt-Steuereinrichtung 8 oder in den einzelnen Steuereinheiten 1'-4' vorgesehen ist, gibt jeweils das Bearbeitungswerkzeug für einen weiteren Bearbeitungsschritt nur dann frei, wenn eine Arbeitsvorgangs-Erfassungseinrichtung festgestellt hat, daß die vorgegebenen Arbeitsvorgänge in einem vorangehenden Arbeitsschritt ausgeführt worden sind. Damit wird eine Prozeßabsicherung erreicht, da erst nach Abarbeitung des kompletten Arbeitsinhaltes eines oder mehrerer Bearbeitungswerkzeuge die Freigabe für den folgenden Arbeitsprozeß vorgenommen wird.

Die Bearbeitungswerkzeuge 1-4 können Drehschrauber 1, 2 sein, die werkzeug-spezifischen Parameter können den Werkstück-Typ angeben, und die bearbeitungs-spezifischen Parameter können Schraubparametersätze für den einen oder die mehreren Drehschrauber pro Arbeitsschritt angeben. Sobald die Information von der Erfassungseinrichtung 4 gelesen ist, nimmt die Einstelleinrichtung in der jeweiligen Steuereinheit 1'-4' die Einstellung der Drehschrauber auf die Daten der Schraubparametersätze vor.

Verschiedene Ausführungsformen für das Bearbeitungswerkzeug mit der Erfassungseinrichtung sind möglich, wie nachstehend beschrieben wird. Die zu erfassenden Parameter 7, 7' am Werkstück können als Strichcode ausgeführt sein und die Erfassungseinrichtung 4 kann in diesem Fall eine einfache Scaneinrichtung, d.h. ein Strichcodelaser. Auch andere Bildaufnahmeeinrichtungen, beispielsweise eine Kamera, kann für die Erfassungseinrichtung 4 verwendet werden. Das Bearbeitungswerkzeug kann mit einer Beleuchtungseinrichtung (z.B. eine Infrarotbeleuchtung, wenn die Scaneinrichtung ein Infrarotscanner ist) versehen werden, um einen vor dem Bearbeitungswerkzeug liegenden Bereich zu erleuchten, so daß das Lesen der Information 7, 7' verbessert wird.

Auch andere Möglichkeiten für die Erfassungseinrichtung 4 sind denkbar. Beispielsweise kann die Information (Parameter) 7, 7' in Form eines Signals vorhanden sein, das von einer am Werkstück oder an einer anderen Stelle im Bearbeitungsbereich 1 vorgesehenen Sendeeinrichtung ausgesendet wird, wobei die Erfassungseinrichtung 4 am Bearbeitungswerkzeug eine Empfangseinrichtung für dieses Signal aufweist. Infrarotsysteme zum Aussenden und Empfangen der jeweiligen Information sind ein Beispiel für die verwendete Übertragungsgechnik.

Vorzugsweise liest das erste aufgehobene Bearbeitungswerkzeug 4'' die gesamten Parametersätze für sämtliche Werkzeuge 1-3, 4'' von dem Werkstück 5'. Es ist jedoch auch möglich, wenn jedes Bearbeitungwerkzeug 1-3 eine Erfassungseinrichtung 4 aufweist, daß jedes Bearbeitungswerkzeug nur den jeweils vorgesehenen Parametersatz liest.

Der Abtastvorgang der Parameter kann automatisch erfolgen, wobei die Bedienungsperson lediglich den Strichcode anpeilen muß. Ein Schalter kann vorgesehen werden, um das erfolgreiche Lesen der Daten zu bestätigen. Ferner kann an dem Bearbeitungswerkzeug selbst eine Anzeigeeinrichtung vorgesehen werden, die die gescannten Daten und eine Fertig-Meldung anzeigen. Nicht notwendigerweise sind sämtliche Parameter für die einzelnen Bearbeitungsvorgänge eines einzelnen Bearbeitungswerkzeugs an einer zentralen Stelle, wie in Fig. 2 gezeigt, angebracht. Es ist auch möglich, daß ein Bearbeitungsstrichcode jeweils an der Bearbeitungsstelle 9 vorgesehen ist, wobei die Bedienungsperson den dort vorgesehenen Strichcode anpeilt und dann sofort nach der Freigabe an der Bearbeitungsstelle 9 eine Bearbeitung vornimmt.

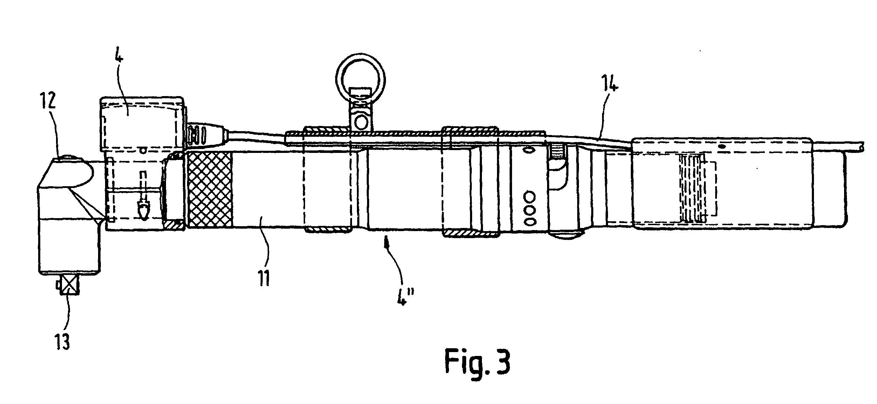

Figur 3 zeigt eine Ausführungsform eines Bearbeitungswerkzeugs 4'' gemäß der Erfindung. Das Bearbeitungswerkzeug (hier ein Winkelschrauber) umfaßt typischerweise ein Gehäuse 11, ein Winkelgetriebe 12 und einen Ansatz 13, auf den die Stecknuß aufgesetzt wird. In Fig. 3 ist die Erfassungseinrichtung 4 auf das Gehäuse 11 des Bearbeitungswerkzeugs 4'' mit Hilfe eines Halters aufgesetzt und die erfaßten Signale werden über eine Leitung 14 an die Steuereinheit 4' übertragen. Das Aufsetzen der Erfassungseinrichtung 4 auf das Bearbeitungswerkzeug ist nicht auf einen Winkelschrauber beschränkt, sondern jedes andere Bearbeitungswerkzeug kann verwendet werden.

Gemäß einer weiteren Ausführungsform der Erfindung ist es auch möglich, je nach Ausführung der Erfassungseinrichtung 4, die Erfassungseinrichtung 4 in das Gehäuse 11 des Bearbeitungswerkzeugs zu integrieren. Die von der Erfassungseinrichtung 4 aufgenommenen Daten können über faser-optische Kabel zu der Steuereinheit 4 übertragen werden, oder auf die bereits zwischen dem Bearbeitungswerkzeug und der Steuereinheit vorgesehenen Steuerleitung multiplexiert werden. Somit muß nur ein Kabel zwischen Bearbeitungswerkzeug und Steuereinheit verwendet werden. Auch eine Funkübertragung direkt an die Steuereinheit ist möglich.

Die Erfassungseinrichtung 4 muß nicht notwendigerweise mit Hilfe eines Halters auf das Bearbeitungswerkzeug aufgesetzt sein. Es kann an dem Bearbeitungswerkzeug festgeklebt oder angeschraubt sein, so daß die Erfassungseinrichtung 4 wahlweise an einem von mehreren Bearbeitungswerkzeugen angebracht werden kann. Wie oben ausgeführt, kann die Bearbeitungsvorrichtung ein Bearbeitungswerkzeug mit einer Erfassungseinrichtung 4 oder mehrere Bearbeitungswerkzeuge mit Erfassungseinrichtungen 4 umfassen, zusätzlich zu anderen Bearbeitungswerkzeugen ohne Erfassungseinrichtung 4.

### Gewerbliche Anwendbarkeit

Voranstehend wurde die Bearbeitungsvorrichtung und das Bearbeitungswerkzeug gemäß der Erfindung unter Bezugnahme auf die Serienfertigung in der Automobilbranche beschrieben. Jedoch ist die Erfindung auf sämtliche Serienfertigungen anwendbar, bei der es erforderlich ist, eine Anzahl von Bearbeitungswerkzeugen auf bestimmte Parametersätze in Zuordnung zu jedem sukzessive ankommenden Werkstück einzustellen. Somit sind die Bearbeitungsvorgänge und die Bearbeitungsparameter nicht auf das Schrauben mit einem vorgegebenen Drehmoment und/oder Drehwinkel in den Parametersätzen beschränkt, sondern je nach Anforderung des auszuführenden Bearbeitungsvorgangs können die spezifischen Parameter erfaßt werden.

## Patentansprüche

1. Bearbeitungsvorrichtung (Fig. 2, 4''), umfassend:
**a)** mindestens ein handgeführtes Bearbeitungswerkzeug (4'') mit einer mechanischen Bearbeitungseinheit (12, 13) zur mechanischen Bearbeitung eines Werkstücks (5) ;
**b)** mindestens eine getrennt von dem Bearbeitungswerkzeug (4'') vorgesehene Steuervorrichtung (1', 2', 3', 4'; 8), die mit dem handgeführten Bearbeitungswerkzeug (4'') in Verbindung (14) steht;
**c)** wobei die Steuervorrichtung (1', 2', 3', 4'; 8) eine Steuerung des handgeführten Bearbeitungswerkzeugs (Fig. 2; 4'') auf Grundlage von in der Steuervorrichtung vorhandenen Werkstück-spezifischen Bearbeitungsparametern (7') steuert;
***dadurch gekennzeichnet, dass***
**d)** die Werkstück-spezifischen Bearbeitungsparameter (7') auf einer am Werkstück angebrachten Bearbeitungskarte (7') angebracht sind; und
**e)** die in der Steuervorrichtung vorhandenen Werkstück-spezifischen Bearbeitungsparameter (7'), auf Grundlage derer die Steuervorrichtung die Steuerung des Bearbeitungswerkzeugs vornimmt, an dem Bearbeitungswerkzeug (4'') selbst mit Hilfe einer Erfassungseinrichtung (4) erfasst und an die Steuervorrichtung übertragen werden; und
**f)** die Erfassungseinrichtung (4) eine optische Scan-Einrichtung ist, die Werkzeug-spezifischen Bearbeitungsparamter am Werkstück abscannt und auf das Bearbeitungswerkzeug (4'') in der Nähe der mechanischen Bearbeitungseinheit (13) auf ein Gehäuse (11) des Bearbeitungswerkzeugs (4'') aufgesetzt oder in das Gehäuse (11) integriert ist, wobei
**g)** die Scaneinrichtung (4) die gescannten Werkstück-spezifischen Bearbeitungsparameter (7) an die Steuervorrichtung (1', 2', 3', 4') überträgt und diese dann eine Steuerung des Bearbeitungswerkzeugs (4'') auf Grundlage der gescannten und übertragenen Werkstück-spezifischen Bearbeitungsparameter (7') vornimmt.

2. Bearbeitungsvorrichtung nach Anspruch 1,
***dadurch gekennzeichnet, dass***
eine Einstelleinrichtung (1'-4') zum Einstellen des einen oder der mehreren Bearbeitungswerkzeuge (4'', 1'-3') auf Grundlage der erfassten Parameter (7) vorgesehen ist.

3. Bearbeitungsvorrichtung nach Anspruch 1,
***dadurch gekennzeichnet, dass***
die Scaneinrichtung ferner Bearbeitungs-spezifische Parameter (7) erfasst und die Bearbeitungs-spezifischen Parameter (7) eine Anzahl von vorgegebenen Arbeitsvorgängen für jedes Bearbeitungswerkzeug (4'', 1-3) in jedem Arbeitsschritt definieren und eine Freigabeeinrichtung (1'-4') vorgesehen ist, die ein oder mehrere Bearbeitungswerkzeuge (4'', 1-3) für einen nachfolgenden Arbeitsschritt nur dann freigibt, wenn eine Arbeitsvorgangs-Erfassungseinrichtung (1'-4') feststellt, dass die vorgegebenen Arbeitsvorgänge in einem vorangehenden Arbeitsschritt ausgeführt wurden.

4. Bearbeitungsvorrichtung nach Anspruch 2,
***dadurch gekennzeichnet, dass***
die ein oder mehreren Bearbeitungswerkzeuge (1-4) Drehschrauber (1, 2) sind, die Werkstück-spezifischen Parameter (7) den Werkstücktyp angeben und die Bearbeitungs-spezifischen Parameter Schraubparametersätze für den einen oder die mehreren Drehschrauber (1, 2) pro Arbeitsschritt angeben, wobei die Einstelleinrichtung (1', 2') die Drehschrauber (1, 2) in jedem Arbeitsschritt auf die Daten der Schraubparametersätze einstellt.

5. Bearbeitungsvorrichtung nach Anspruch 1,
***dadurch gekennzeichnet, dass***
die zu erfassenden Parameter (7) als Strichcode auf der Bearbeitungskarte ausgeführt sind und die Erfassungseinrichtung (4'') ein Strichcodeleser ist.

## Claims

1. Machining device (Fig 2, 4'') comprising:
a) at least one manually operated machining tool (4'') having a mechanical machining unit (12, 13) for the mechanical machining of a workpiece (5);
b) at least one control device (1', 2', 3', 4'; 8) which is provided separately from the machining tool (4'') and is connected (14) to the manually operated machining tool (4'');
c) wherein the control device (1', 2', 3', 4'; 8) controls a control system of the manually operated machining tool (Fig 2; 4'') on the basis of workpiece-specific machining parameters (7') present in the control device;
**characterised in that**
d) the workpiece-specific machining parameters (7') are installed on a machining card (7') attached to the workpiece; and
e) the workpiece-specific machining parameters (7') present in the control device on the basis of which the control device undertakes control of the machining tool are captured on the machining tool (4'') itself with the aid of a capture device (4) and transmitted to the control device; and
f) the capture device (4) is an optical scanning device which scans the tool-specific machining parameters on the workpiece and is set up on the machining tool (4'') close to-the mechanical machining unit (13) on a housing (11) of the machining tool (4'') or integrated into the housing (11), wherein
g) the scanning device (4) transmits the scanned workpiece-specific machining parameters (7) to the control device (1', 2', 3', 4') and the latter then undertakes control of the machining tool (4'') on the basis of the scanned and transmitted workpiece-specific machining parameters (7').

2. Machining device according to Claim 1, **characterised in that** a setting device (1'-4') is provided for setting the single or several machining tools (4'', 1'-3') on the basis of the captured parameters (7).

3. Machining device according to Claim 1, **characterised in that** the scanning device further captures machining-specific parameters (7) and the machining-specific parameters (7) define a number of predetermined work operations for each machining tool (4'', 1-3) in each work step and a clearance device (1'-4') is provided which clears one or more machining tools (4'', 1-3) for a succeeding work step only when a work-operation capture device (1'-4') establishes that the predetermined work operations in a preceding work step have been carried out.

4. Machining device according to Claim 2, **characterised in that** the single or several machining tools (1-4) are screw drivers (1, 2), the workpiece-specific parameters (7) specify the workpiece type and the machining-specific parameters specify sets of screwing parameters for the single or several screw drivers (1, 2) per work step, wherein the setting device (1', 2') sets the screw drivers (1, 2) in each work step to the data of the sets of screwing parameters.

5. Machining device according to Claim 1, **characterised in that** the parameters (7) to be captured are executed in the form of bar code on the machining card and the capture device (4'') is a bar-code reader.

## Revendications

1. Dispositif de traitement (figure 2, 4"), comprenant :
a) au moins un outil de traitement (4") guidé à la main, avec une unité de traitement (12, 13) mécanique pour effectuer le traitement mécanique d'une pièce à travailler (5) ;
b) au moins un dispositif de commande (1', 2', 3', 4' ; 8), prévu séparément de l'outil de traitement (4") et en liaison (14) avec l'outil de traitement (4") guidé à la main ;
c) où le dispositif de commande (1', 2', 3', 4' ; 8) exécute une commande de l'outil de traitement (figure 2; 4") guidé à la main en se basant sur des paramètres de traitement (7') spécifiques à la pièce travaillée, présents dans le dispositif de commande ;
**caractérisé en ce que**
d) les paramètres de traitement (7') spécifiques à la pièce travaillée sont placés sur une carte de traitement (7') montée sur la pièce à travailler ; et
e) les paramètres de traitement (7') spécifiques à la pièce à travailler, présents dans le dispositif de commande, paramètres sur la base desquels le dispositif de commande exécute la commande de l'outil de traitement, sont détectés sur l'outil de traitement (4") lui-même, à l'aide d'un dispositif d'acquisition (4), et sont transmis au dispositif de commande ; et
f) le dispositif d'acquisition (4) est un dispositif de balayage-exploration optique, qui explore sur la pièce à travailler les paramètres de travail spécifiques à la pièce à travailler et qui est posé sur l'outil de traitement (4") à proximité de l'unité de traitement (13) mécanique, c'est-à-dire sur un boîtier (11) de l'outil de traitement (4'') ou est intégré dans le boîtier (11), où
g) le dispositif de balayage-exploration (4) transmet les paramètres de traitement (7) spécifiques à la pièce et issus de l'exploration au dispositif de commande (1', 2', 3', 4') et celui-ci exécutant ensuite une commande de l'outil de traitement (4") en se basant sur les paramètres de traitement (7') spécifiques à la pièce, issus du balayage d'exploration et ayant été transmis.

2. Dispositif de traitement selon la revendication 1,
**caractérisé en ce qu'**
un dispositif de réglage (1' à 4') est prévu pour régler le ou les outils de traitement (4", 1' à 3'), en se basant sur les paramètres (7) appréhendés.

3. Dispositif de traitement selon la revendication 1,
**caractérisé en ce que**
le dispositif de balayage-exploration détecte en outre des paramètres (7) spécifiques au traitement et les paramètres (7) spécifiques au traitement définissent une pluralité de processus opératoires prédéterminés, pour chaque outil de traitement (4", 1 à 3) à chaque étape opératoire, et un dispositif de déclenchement (1' à 4') est prévu, qui ne déclenche un ou plusieurs outils de traitement (4", 1 à 3), pour une étape opératoire subséquente, que lorsqu'un dispositif de détection de processus opératoire (1' à 4') a constaté que les processus opératoires prédéterminés ont été exécutés lors d'une étape opératoire précédente.

4. Dispositif de traitement selon la revendication 2,
**caractérisé en ce que**
le ou les outils de traitement (1 à 4) sont des visseurs (1, 2), les paramètres (7) spécifiques à la pièce indiquent le type de pièce et les paramètres spécifiques au traitement indiquent des jeux de paramètres de vissage pour le ou les visseurs (1, 2), par étape opératoire, le dispositif de réglage (1', 2') réglant les visseurs (1, 2) à chaque étape opératoire, aux données des jeux de paramètres de vissage.

5. Dispositif de traitement selon la revendication 1,
**caractérisé en ce que**
les paramètres (7) à détecter sont réalisés sous la forme de code-barre sur la carte de traitement et le dispositif de détection (4") est un lecteur de code-barre.
